(19) **Europäisches Patentamt / European Patent Office / Office européen des brevets**

(11) **EP 4 685 183 A1**

(12) ## EUROPEAN PATENT APPLICATION

(43) Date of publication:
**28.01.2026 Bulletin 2026/05**

(21) Application number: **24190815.1**

(22) Date of filing: **25.07.2024**

(51) International Patent Classification (IPC):
**C08L 23/04** (2006.01)

(52) Cooperative Patent Classification (CPC):
(C-Sets available)
**C08L 23/04;** C08L 2203/16; C08L 2205/025;
C08L 2207/20                                          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **WANG, Jingbo**
**4021 Linz (AT)**
• **FAWAZ, Joel**
**4021 Linz (AT)**
• **BORAGNO, Luca**
**4021 Linz (AT)**
• **KAHLEN, Susanne Margarete**
**4021 Linz (AT)**

(74) Representative: **Maiwald GmbH**
**Elisenhof**
**Elisenstraße 3**
**80335 München (DE)**

(54) **MIXED-PLASTICS POLYETHYLENE COMPOSITION SUITABLE FOR FILM APPLICATIONS**

(57) The present invention relates to a mixed-plastics polyethylene composition having melt flow rate $MFR_2$ of from 0.10 to 3.00 g/10 min, determined according to ISO 1133 at 190°C and 2.16 kg and a density of from 915.0 to 930.0 kg/m$^3$, determined by ISO 1183, obtainable by blending and extruding components comprising from 50.00 to 99.00 wt.-% of a first mixed-plastics polyethylene recycling blend (A) and from 1.00 to 49.00 wt.-% of a second mixed plastics polyethylene recycling blend (B), a process for preparing said mixed-plastics polyethylene composition, an article, preferably a film comprising said mixed-plastics polyethylene composition and the use of said mixed-plastics polyethylene composition for the production of a film.

EP 4 685 183 A1

(52) Cooperative Patent Classification (CPC): (Cont.)

C-Sets
**C08L 23/04, C08L 23/04**

## Description

The present invention relates to a mixed-plastics polyethylene composition having melt flow rate $MFR_2$ of from 0.10 to 3.00 g/10 min, determined according to ISO 1133 at 190°C and 2.16 kg and a density of from 915.0 to 930.0 kg/m$^3$, determined by ISO 1183, obtainable by blending and extruding components comprising from 50.00 to 99.00 wt.-% of a first mixed-plastics polyethylene recycling blend (A) and from 1.00 to 49.00 wt.-% of a second mixed plastics polyethylene recycling blend (B), a process for preparing said mixed-plastics polyethylene composition, an article, preferably a film comprising said mixed-plastics polyethylene composition and the use of said mixed-plastics polyethylene composition for the production of a film.

## Technical background

The challenge of disposal of accumulated plastic waste and corresponding environmental issues have received widespread attention from the public and professionals. Therefore, recycling of plastic material has become an important topic, where plastic waste can be turned into resources for new plastic products. Hence, environmental and economic aspects can be combined in recycling and reusing plastic material.

Although recycling of plastic material has already begun in the mid-90s by implementing collection systems, which allow more target orientated collection and separation of plastic materials from other household waste materials, the reuse of plastic material originating from plastic waste is still limited. Waste plastics (e.g., post-consumer recyclate (PCR)) generally contain mixtures of different plastics and several contaminant materials. These mixtures would usually need extensive mechanical recycling (i.e., material sorting and cleaning) prior to further preparation or use. The employed modification methods are often limited to the use of relatively homogeneous plastic materials with a low content of contaminants. Thus, already established methods for modification of homogeneous plastic materials, and, in particular of virgin polymers, cannot be applied.

Moreover, these methods often do not provide recycled plastic materials with the required properties to be used in a wide range of applications.

However, there is a general need for further modification methods of waste plastic materials, in particular, post-consumer recyclate.

Polyolefins such as polyethylenes are often used in films. Besides mechanical requirements on polyethylenes for film applications, a low content of gel is important. The presence of gels is a common problem in polyolefins. The term "gel" generally refers to highly localized imperfections in the polyolefin, especially film made from polyolefin, that are visually distinct from the surrounding film, mostly due to the presence of either high concentrations of unblended polymer, unreacted catalyst and activator, or both, but can include other types of visually distinct imperfections as well. The less homogeneous films are characterized by a higher film thickness distribution. The presence of gels lowers the value of these films, and in some cases makes the films unmarketable. Especially recyclates are often characterized by a rather high gel content. Thus, there is a need in the art for methods for reducing the gel content of polyolefin recyclates.

There are methods known in the art for reducing the gel content in virgin polyolefins. Many of these methods rely on filtering a polyolefin melt. For example, US 7,393,916 suggests passing the polyolefin through one active screen filter having a mesh size of from 70 to 200 $\mu$m.

In the present invention it has surprisingly been found that mixing and melting a major amount of a first mixed-plastics polyethylene recycling blend (A), which has a flow rate ratio $FRR_{21/2}$, being the ratio of $MFR_{21}/MFR_2$, of from more than 40 to 100, with a second mixed-plastics polyethylene recycling blend (B), which has a flow rate ratio $FRR_{21/2}$, being the ratio of $MFR_{21}/MFR_2$, of from 15 to 40, provides a mixed-plastics polyethylene composition with a significantly reduced gel content. If needed the gel content can then be further reduced by addition of peroxides. The mixed-plastics polyethylene composition according to the invention has high amounts of polyethylene resins which originate from post-consumer waste and/or post-industrial waste and shows a good balance of properties in regard of mechanical properties, good impact properties and optical properties and shows a low gel content. Therefore, the mixed-plastics polyethylene composition according to the invention is suitable for film applications.

## Summary of the invention

In a first aspect the present invention relates to a mixed-plastics polyethylene composition having

- a melt flow rate $MFR_2$ of from 0.10 to 3.00 g/10 min, preferably from 0.15 to 2.50 g/10 min, more preferably from 0.20 to 2.00 g/10 min, determined according to ISO 1133 at 190°C and 2.16 kg; and
- a density of from 915.0 to 930.0 kg/m$^3$, preferably from 918.0 to 928.0 kg/m$^3$, more preferably from 920.0 to 925.0 kg/m$^3$, determined according to ISO 1183;

obtainable by blending and extruding components comprising

a) 50.00 to 99.00 wt.-%, preferably 55.00 to 95.00 wt.-%, more preferably 60.00 to 90.00 wt.-%, based on the overall weight of the composition, of a first mixed-plastics polyethylene recycling blend (A), wherein at least 92 wt.-%, preferably at least 95 wt.-%, more preferably 100 wt.-% of the first mixed-plastics polyethylene blend (A) originates from post-consumer waste and/or post-industrial waste; and wherein the first mixed-plastics polyethylene blend (A) has

- a melt flow rate $MFR_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio $FRR_{21/2}$, being the ratio of $MFR_{21}/MFR_2$, of from more than 40 to 100, such as from 45 to 100, preferably from 60 to 95, more preferably from 70 to 90;
- a density of from 915.0 to 945.0 kg/m$^3$, preferably from 917.0 to 942.0 kg/m$^3$, most preferably from 920.0 to 940.0 kg/m$^3$, determined according to ISO 1183; and
- a total amount of ethylene units (C2 units) of from 87.50 to 97.50 wt.-%, preferably from 88.50 to 96.50 wt.-%, most preferably from 90.00 to 95.50 wt.-%, based on the overall weight of the blend (A) and determined by quantitative $^{13}C\{^1H\}$ NMR measurement; and

b) 1.00 to 49.00 wt.-%, preferably 4.95 to 42.50 wt.-%, more preferably 9.95 to 38.00 wt.-%, based on the overall weight of the composition, of a second mixed-plastics polyethylene recycling blend (B) wherein from 80 to 97 wt.-%, preferably from 85 to 95 wt.-% wt.-%, more preferably from 87 to 93 vnt.-% of the second mixed-plastics polyethylene recycling blend (B) originates from post-consumer waste and/or post-industrial waste; and wherein the second mixed-plastics polyethylene recycling blend (B) has

- a melt flow rate $MFR_2$ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio $FRR_{21/2}$, being the ratio of $MFR_{21}/MFR_2$, of from 15 to 40, preferably from 17 to 37, more preferably from 20 to 35;
- a density of from 910.0 to 925.0 kg/m$^3$, preferably from 912.0 to 922.0 kg/m$^3$, most preferably from 915.0 to 920.0 kg/m$^3$, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (A) and determined by quantitative $^{13}C\{^1H\}$ NMR measurement.

In a second aspect the present invention relates to a process for preparing the mixed-plastics polyethylene composition as described above or below, comprising the steps of:

a) providing a first mixed-plastics polyethylene recycling blend (A) in an amount of 50.00 to 99.00 wt.-%, preferably 55.00 to 95.00 wt.-%, more preferably 60.00 to 90.00 wt.-%, based on the overall weight of the composition, wherein at least 92 wt.-%, preferably at least 95 wt.-%, more preferably 100 wt.-% of the first mixed-plastics polyethylene recycling blend (A) originates from post-consumer waste and/or post-industrial waste; and wherein the first mixed-plastics polyethylene recycling blend (A) has

- a melt flow rate $MFR_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio $FRR_{21/2}$, being the ratio of $MFR_{21}/MFR_2$, of from more than 40 to 100, such as from 45 to 100, preferably from 60 to 95, more preferably from 70 to 90;
- a density of from 915.0 to 945.0 kg/m$^3$, preferably from 917.0 to 942.0 kg/m$^3$, most preferably from 920.0 to 940.0 kg/m$^3$, determined according to ISO 1183; and
- a total amount of ethylene units (C2 units) of from 87.50 to 97.50 wt.-%, preferably from 88.50 to 96.50 wt.-%, most preferably from 90.00 to 95.50 wt.-%, based on the overall weight of the blend (A) and determined by quantitative $^{13}C\{^1H\}$ NMR measurement;

b) providing a second mixed-plastics polyethylene recycling blend (B) in an amount of 1.00 to 49.00 wt.-%, preferably 4.95 to 42.50 wt.-%, more preferably 9.95 to 38.00 wt.-%, based on the overall weight of the composition, wherein from 80 to 97 wt.-%, preferably from 85 to 95 wt.-% wt.-%, more preferably from 87 to 93 vnt.-% of the second mixed-plastics polyethylene recycling blend (B) originates from post-consumer waste and/or post-industrial waste;

and wherein the second mixed-plastics polyethylene recycling blend (B) has

- a melt flow rate $MFR_2$ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio $FRR_{21/2}$, being the ratio of $MFR_{21}/MFR_2$, of from 15 to 40, preferably from 17 to 37, more preferably from 20 to 35;
- a density of from 910.0 to 925.0 kg/m³, preferably from 912.0 to 922.0 kg/m³, most preferably from 915.0 to 920.0 kg/m³, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (B) and determined by quantitative $^{13}C\{^1H\}$ NMR measurement;

c) optionally providing a radical initiator, optionally in form of a masterbatch in the presence of a carrier polymer, in an amount of from 0 to 5.0 wt.-%, preferably from 0.0001 to 3.5 wt.-%, more preferably from 0.001 to 2.5 wt.-%, based on the overall weight of the composition;

d) melting and mixing the mixed-plastics polyethylene recycling blend (A), the mixed-plastics polyethylene recycling blend (B) and optionally the radical initiator in an extruder, optionally a twin screw extruder, and

e) optionally pelletizing the obtained mixed-plastics polyethylene composition.

In a third aspect the present invention relates to an article comprising the mixed-plastics polyethylene composition as described above or below, preferably in an amount of from 90 to 100 wt.-%, more preferably from 95 to 100 wt.-%, based on the total weight of the article.

Said article is preferably a film, more preferably a cast film or a blown film.

In a fourth aspect the present invention relates to the use of a mixed-plastics polyethylene composition as described above or below for the production of a film, preferably for the production of a packaging film, with an amount of from 90.0 to 99.7 wt.-%, preferably from 92.5 to 99.0 wt.-%, more preferably from 95.0 to 98.5 wt.-%, based on the overall weight of the film, of components originating from post-consumer waste and/or post-industrial waste.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

For the purposes of the present description and of the subsequent claims, the term "recycled waste" is used to indicate a material recovered from post-consumer waste and/or post-industrial waste, as opposed to virgin polymers and/or materials. Post-consumer waste refers to objects having completed at least a first use cycle (or life cycle), i.e. having already served their first purpose. Post-industrial waste refers to manufacturing scrap, which does not normally reach a consumer.

The term "virgin" denotes the newly produced materials and/or objects prior to their first use, which have not already been recycled. In case that the origin of the polymer is not explicitly mentioned the polymer is a "virgin" polymer.

The term "recycled material" such as used herein denotes materials reprocessed from "recycled waste".

The term "recycling blend" denotes a blend of polymer resins which in its mass majority comprises polymer resins, which originate from recycled waste.

A blend denotes a mixture of two or more components, wherein one of the components is polymeric. In general, the blend can be prepared by mixing the two or more components. Suitable mixing procedures are known in the art.

The term "polyethylene blend" requires the presence of at least two different polyethylenes such as two polyethylenes differing as to their density. For example, a bimodal polyethylene as obtained from two reactors operated under different conditions constitutes a polyethylene blend, in this case an in-situ blend of two reactor products.

It is self-explaining that polyethylene blends as obtained from post-consumer waste and/or post-industrial waste will include a broad variety of polyethylenes. In addition to that contamination by other plastics, mainly polypropylene, polystyrene, polyamide, polyesters, wood, paper, limonene, aldehydes, ketones, fatty acids, metals, and/or long term decomposition products of stabilizers can also be found. It goes without saying that such contaminants are not desirable.

It should be understood that the mixed-plastics polyethylene blend of the present invention is not a cookie-cutter blend as some of the commercially available recyclates. The mixed-plastics polyethylene blend according to the present invention should rather be compared with virgin blends.

For the purposes of the present description and of the subsequent claims, the term "mixed-plastics polyethylene" indicates a polymer material including predominantly units derived from ethylene apart from other polymeric ingredients of arbitrary nature. Such polymeric ingredients may for example originate from monomer units derived from alpha olefins such as propylene, butylene, hexene, octene, and the like, styrene derivatives such as vinylstyrene, substituted and unsubstituted acrylates, substituted and unsubstituted methacrylates.

A mixed-plastics polyethylene recycling blend denotes the starting blend comprising a mass majority of the mixed-plastics polyethylene as described above. The mixed-plastics polyethylene recycling blend can further comprise virgin polyethylene components in minor mass amounts. Conventionally further non-polymeric components such as fillers, including organic and inorganic fillers for example talc, chalk, carbon black, and further pigments such as $TiO_2$ as well as paper and cellulose may be present. In a specific and preferred embodiment the waste stream is a consumer waste stream. Such a waste stream may originate from conventional collecting systems such as those implemented in the European Union. Post-consumer waste material is characterized by a limonene content of from 0.1 to 500 mg/kg (as determined using solid phase microextraction (HS-SPME-GC-MS) by standard addition).

## Detailed description

Mixed-plastics polyethylene composition

In a first aspect the present invention relates to a mixed-plastics polyethylene composition having

- a melt flow rate $MFR_2$ of from 0.10 to 3.00 g/10 min, preferably from 0.15 to 2.50 g/10 min, more preferably from 0.20 to 2.00 g/10 min, determined according to ISO 1133 at 190°C and 2.16 kg; and
- a density of from 915.0 to 930.0 kg/m$^3$, preferably from 918.0 to 928.0 kg/m$^3$, more preferably from 920.0 to 925.0 kg/m$^3$, determined according to ISO 1183;

obtainable by blending and extruding components comprising

a) 50.00 to 99.00 wt.-%, preferably 55.00 to 95.00 wt.-%, more preferably 60.00 to 90.00 wt.-%, based on the overall weight of the composition, of a first mixed-plastics polyethylene recycling blend (A), wherein at least 92 wt.-%, preferably at least 95 wt.-%, more preferably 100 wt.-% of the first mixed-plastics polyethylene blend (A) originates from post-consumer waste and/or post-industrial waste; and wherein the first mixed-plastics polyethylene blend (A) has

- a melt flow rate $MFR_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio $FRR_{21/2}$, being the ratio of $MFR_{21}/MFR_2$, of from more than 40 to 100, such as from 45 to 100, preferably from 60 to 95, more preferably from 70 to 90;
- a density of from 915.0 to 945.0 kg/m$^3$, preferably from 917.0 to 942.0 kg/m$^3$, most preferably from 920.0 to 940.0 kg/m$^3$, determined according to ISO 1183; and
- a total amount of ethylene units (C2 units) of from 87.50 to 97.50 wt.-%, preferably from 88.50 to 96.50 wt.-%, most preferably from 90.00 to 95.50 wt.-%, based on the overall weight of the blend (A) and determined by quantitative $^{13}C\{^1H\}$ NMR measurement; and

b) 1.00 to 49.00 wt.-%, preferably 4.95 to 42.50 wt.-%, more preferably 9.95 to 38.00 wt.-%, based on the overall weight of the composition, of a second mixed-plastics polyethylene recycling blend (B) wherein from 80 to 97 wt.-%, preferably from 85 to 95 wt.-% wt.-%, more preferably from 87 to 93 vnt.-% of the second mixed-plastics polyethylene recycling blend (B) originates from post-consumer waste and/or post-industrial waste; and wherein the second mixed-plastics polyethylene recycling blend (B) has

- a melt flow rate $MFR_2$ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio $FRR_{21/2}$, being the ratio of $MFR_{21}/MFR_2$, of from 15 to 40, preferably from 17 to 37, more preferably from 20 to 35;
- a density of from 910.0 to 925.0 kg/m$^3$, preferably from 912.0 to 922.0 kg/m$^3$, most preferably from 915.0 to 920.0 kg/m$^3$, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (B) and determined by quantitative

$^{13}C\{^1H\}$ NMR measurement.

The mixed-plastics composition has a melt flow rate $MFR_2$ of from 0.10 to 3.00 g/10 min, preferably from 0.15 to 2.50 g/10 min, more preferably from 0.20 to 2.00 g/10 min, determined according to ISO 1133 at 190°C and 2.16 kg.

Further, the mixed-plastics composition preferably has a melt flow rate $MFR_{21}$ of from 10.0 to 100.0 g/10 min, more preferably from 12.0 to 75.0 g/10 min, still more preferably from 15.0 to 50.0 g/10 min, determined according to ISO 1133 at 190°C and 21.6 kg.

Still further, the mixed-plastics composition preferably has a flow rate ratio $FRR_{21/2}$, being the ratio of $MFR_{21}/MFR_2$, of from 35 to 100, more preferably from 40 to 95, still more preferably from 45 to 90.

Additionally, the mixed-plastics composition has a density of from 915.0 to 930.0 kg/m$^3$, preferably from 918.0 to 928.0 kg/m$^3$, more preferably from 920.0 to 925.0 kg/m$^3$, determined according to ISO 1183.

The mixed-plastics composition preferably comprises from 90.0 to 99.7 wt.-%, preferably from 92.5 to 99.0 wt.-%, more preferably from 95.0 to 98.5 wt.-%, based on the overall weight of the composition, of components originating from post-consumer waste and/or post-industrial waste.

The mixed-plastics composition preferably further comprises from 0.3 to 10.0 wt.-%, preferably from 1.0 to 7.5 wt.-%, more preferably from 1.5 to 5.0 wt.-%, based on the overall weight of the composition, of virgin components.

Said virgin components are preferably selected from virgin polymers, optionally additives and optionally a radical initiator, optionally in form of a masterbatch in the presence of a carrier polymer.

The additives are preferably selected from common additives for preparation processes of polyolefins, such as modifiers, stabilizers, antistatic agents, lubricants, nucleating agents, foam nucleators, acid scavengers, UV stabilizers, slip agents and pigments, as well as fillers and reinforcement agents.

The advantage of the mixed-plastics polyethylene recycling blend (B) is that it usually contains additives from the preparation processes of virgin polymers and first-use articles, meaning that the further addition of additives may not be required at all. However, especially stabilizers like primary and secondary antioxidants are sometimes consumed during the processing and usage phase, and addition of stabilizers in suitable amounts is preferred.

The additives are generally added in an amount of from 0 to 10 wt.-%, preferably from 0 to 5 wt.-%, relative to the total weight of the mixed-plastics polyethylene composition.

The radical initiator, optionally in form of a masterbatch in the presence of a carrier polymer is preferably added to the mixed-plastics polyethylene composition in an amount of from 0 to 5.0 wt.-%, preferably from 0.0001 to 3.5 wt.-%, more preferably from 0.001 to 2.5 wt.-%, based on the overall weight of the mixed-plastics polyethylene composition.

In one embodiment, the mixed-plastics polyethylene composition does not comprise the radical initiator.

In another embodiment, the mixed-plastics polyethylene composition comprises the radical initiator in an amount of from 0.0001 to 5.0 wt.-%, preferably from 0.0001 to 3.5 wt.-%, more preferably from 0.001 to 2.5 wt.-%, based on the overall weight of the mixed-plastics polyethylene composition.

It is preferred that the mixed-plastics polyethylene composition comprises the radical initiator.

The radical initiator can be added to the mixed-plastics composition in pure form or in form of a masterbatch.

When added in pure form, the radical initiator is preferably present in the mixed-plastics composition in an amount of from 1 to 5000 ppm, more preferably from 10 to 2500 ppm, still more preferably from 20 to 1000 ppm, based on the overall weight of the mixed-plastics polyethylene composition.

When added in form of a masterbatch, the masterbatch is preferably present in the mixed-plastics composition in an amount of from 0.01 to 5.0 wt.-%, more preferably from 0.05 to 3.5 wt.-%, still more preferably from 0.1 to 2.5 wt.-%, based on the overall weight of the mixed-plastics polyethylene composition.

The mixed plastics polyethylene composition is obtainable by blending a first mixed-plastics polyethylene recycling blend (A), a second mixed-plastics polyethylene recycling blend (B), optionally additives as described above and optionally a radical initiator.

When blending the first mixed-plastics polyethylene recycling blend (A), the second mixed-plastics polyethylene recycling blend (B), optionally additives as described above with a radical initiator, the radical initiator is preferably firstly added to the first mixed-plastics polyethylene recycling blend (A) and the second mixed-plastics polyethylene recycling blend (B) before melting and mixing optionally with the additives as described above.

It is preferred that the mixed plastics polyethylene composition comprises the first mixed-plastics polyethylene recycling blend (A), the second mixed-plastics polyethylene recycling blend (B), optionally additives as described above and optionally the radical initiator in an amount from 90.0 to 100 wt.-%, more preferably from 95.0 to 100 wt.-%, based on the total weight of the mixed plastics polyethylene composition.

Other components can be polymeric components, such as polyethylene components, in an amount of from 0 to 10 wt.-%, preferably 0 to 5 wt.-%, based on the total weight of the mixed plastics polyethylene composition.

In a preferred embodiment, the mixed plastics polyethylene composition comprises, preferably consists of first mixed-plastics polyethylene recycling blend (A), the second mixed-plastics polyethylene recycling blend (B), optionally additives as described above and optionally the radical initiator.

In the following the first mixed-plastics polyethylene recycling blend (A), the second mixed-plastics polyethylene recycling blend (B) and the radical initiator are further described.

First mixed-plastics polyethylene recycling blend (A)

The first mixed-plastics polyethylene recycling blend (A) is present in the mixed-plastics polyethylene composition in an amount of from 50.00 to 99.00 wt.-%, preferably 55.00 to 95.00 wt.-%, more preferably 60.00 to 90.00 wt.-%, based on the overall weight of the mixed-plastics polyethylene composition.

Thereby from at least 92 wt.-%, preferably at least 95 wt.-%, more preferably 100 wt.-% of the first mixed-plastics polyethylene recycling blend (A) originates from a post-consumer waste stream and/or a post-industrial waste stream, preferably from a post-consumer waste stream, such as from conventional collecting systems (curb-side collection), such as those implemented in the European Union.

Said post-consumer waste can be identified by its limonene content. It is preferred that the post-consumer waste has a limonene content, determined by using solid phase micro-extraction (HS-SPME-GC-MS), of from 0.1 to 500 mg/kg.

The first mixed-plastics polyethylene recycling blend (A) has a melt flow rate of from 0.10 to 2.00 g/10 min, preferably from 0.15 to 1.50 g/10 min, more preferably from 0.20 to 1.00 g/10 min, determined according to ISO 1133 at 190°C and 2.16 kg.

Further, the first mixed-plastics polyethylene recycling blend (A) preferably has a melt flow rate $MFR_{21}$ of from 10.0 to 100.0 g/10 min, more preferably from 12.0 to 75.0 g/10 min, still more preferably from 15.0 to 50.0 g/10 min, determined according to ISO 1133 at 190°C and 21.6 kg.

Additionally, the first mixed-plastics polyethylene recycling blend (A) has a flow rate ratio $FRR_{21/2}$, being the ratio of $MFR_{21}/MFR_2$, of from more than 40 to 100, such as from 45 to 100, preferably from 60 to 95, more preferably from 70 to 90.

The high flow rate ratio indicates that the first mixed-plastics polyethylene recycling blend (A) has very high amounts of long chain branching components, such as low density polyethylene (LDPE) components.

The first mixed-plastics polyethylene recycling blend (A) thus can be seen as a LDPE-rich recycling blend.

It is preferred that the first mixed-plastics polyethylene recycling blend (A) has a lower melt flow rate $MFR_2$ than the second mixed-plastics polyethylene recycling blend (B).

The first mixed-plastics polyethylene recycling blend (A) has a higher flow rate ratio $FRR_{21/2}$ than the second mixed-plastics polyethylene recycling blend (B).

Further, the first mixed-plastics polyethylene recycling blend (A) has a density of from 915.0 to 945.0 kg/m$^3$, preferably from 917.0 to 942.0 kg/m$^3$, most preferably from 920.0 to 940.0 kg/m$^3$, determined according to ISO 1183.

It is preferred that the first mixed-plastics polyethylene recycling blend (A) has a higher density than the second mixed-plastics polyethylene recycling blend (B).

The first mixed-plastics polyethylene recycling blend (A) has a total amount of ethylene units (C2 units) of from 87.50 to 97.50 wt.-%, preferably from 88.50 to 96.50 wt.-%, most preferably from 90.00 to 95.50 wt.-%, determined by quantitative $^{13}C\{^1H\}$ NMR measurement.

Further, the first mixed-plastics polyethylene recycling blend (A) comprises

- a total amount of continuous units having 3 carbon atoms corresponding to polypropylene (continuous C3 units) of from 0 to 2.50 wt.-%, more preferably from 0.10 to 2.00 wt.-%, most preferably from 0.25 to 1.50 wt.-%;
- a total amount of units having 3 carbon atoms as isolated C3 units (isolated C3 units) of from 0 to 1.00 wt.-%, more preferably from 0 to 0.75 wt.-%, most preferably from 0 to 0.50 wt.-%;
- a total amount of units having 4 carbon atoms (C4 units) of from 0.10 to 3.50 wt.-%, more preferably from 0.25 to 3.00 wt.-%, most preferably from 0.50 to 2.50 wt.-%;
- a total amount of units having 6 carbon atoms (C6 units) of from 1.50 to 6.50 wt.-%, more preferably from 2.00 to 5.50 wt.-%, most preferably from 2.50 to 4.50 wt.-%;
- a total amount of units having 7 carbon atoms (C7 units) of from 0 to 2.50 wt.-%, of from 0.10 to 2.00 wt.-%, most preferably of from 0.25 to 1.50 wt.-%, and
- a LDPE content of from 30.00 to 80.00 wt.-%, more preferably from 40.00 to 75.00 wt.-%, most preferably from 50.00 to 70.00 wt.-%.

The total amounts of C2 units, continuous C3 units, isolated C3 units, C4 units, C6 units, C7 units and LDPE content thereby are based on the total weight amount of monomer units in the first mixed-plastics polyethylene recycling blend (A) and are measured or calculated according to quantitative $^{13}C\{^1H\}$ NMR measurement.

It is preferred that the first mixed-plastics polyethylene recycling blend (A) does not comprise carbon black. It is especially preferred that the first mixed-plastics polyethylene recycling blend (A) does also not comprise any pigments other than carbon black. In this case, the first mixed-plastics polyethylene recycling blend (A) may be a natural first mixed-plastics polyethylene recycling blend (A), i.e., no pigments (including carbon black) are included in the components of the first mixed-plastics polyethylene recycling blend (A).

The first mixed-plastics polyethylene recycling blend (A) may also include:

a) 0 to 10 wt.-% units derived from alpha olefin(s),
b) 0 to 3.0 wt.-% stabilizers,
c) 0 to 3.0 wt.-% talc,
d) 0 to 3.0 wt.-% chalk,
e) 0 to 6.0 wt.-% further components

wherein all percentages relate to the first mixed-plastics polyethylene recycling blend (A).

Second mixed-plastics polyethylene recycling blend (B)

The second mixed-plastics polyethylene recycling blend (B) is present in the mixed-plastics polyethylene composition in an amount of from 1.00 to 49.00 wt.-%, preferably 4.95 to 42.50 wt.-%, more preferably 9.95 to 38.00 wt.-%, based on the overall weight of the mixed-plastics polyethylene composition.

Thereby from 80 to 97 wt.-%, preferably from 85 to 95 wt.-% wt.-%, more preferably from 87 to 93 vnt.-% of the second mixed-plastics polyethylene recycling blend (B) originates from a post-consumer waste stream and/or a post-industrial waste stream, preferably from a post-consumer waste stream, such as from conventional collecting systems (curb-side collection), such as those implemented in the European Union. Said post-consumer waste can be identified by its limonene content. It is preferred that the post-consumer waste has a limonene content, determined by using solid phase micro-extraction (HS-SPME-GC-MS), of from 0.1 to 500 mg/kg.

Preferably, from 3 to 20 wt.-%, more preferably 5 to 15 wt.-% more preferably 7 to 13 wt.-% of the second mixed-plastics polyethylene recycling blend (B) originates from virgin polyolefin components, preferably virgin polyethylene components.

Suitable virgin polyethylene components are polyethylene components having a density of 900 to 930 kg/m$^3$, preferably from 905 to 925 kg/m$^2$, more preferably from 910 to 920 kg/m$^2$, determined according to ISO 1183.

The polyethylene component preferably is a linear low density polyethylene (LLDPE).

The polyethylene component is preferably a copolymer of ethylene, which comprises one or more comonomers selected from alpha-olefins having 4 to 12 carbon atoms, preferably 4 to 8 carbon atoms. Preferably, the polyethylene component is a terpolymer of ethylene and two comonomers differing in their amount of carbon atoms.

It is preferred that the polyethylene component is a copolymer of ethylene with comonomer units derived from 1-butene and/or 1-hexene. Preferably the polyethylene component is a terpolymer of ethylene with comonomer units derived from 1-butene and 1-hexene.

The polyethylene component preferably has a total comonomer content, i.e. the content of comonomer units derived from 1-butene and/or 1-hexene, of from 1.0 to 25.0 wt.-%, more preferably from 1.5 to 22.5 wt.-%, still more preferably from 2.0 to 20.0 wt.-%. The polyethylene component preferably has a 1-butene content of from 0.1 to 5.0 wt.-%, more preferably from 0.2 to 3.5 wt.-%, still more preferably from 0.3 to 2.0 wt.-%, based on the total weight of the polyethylene component.

The polyethylene component preferably has a 1-hexene content of from 4.0 to 20.0 wt.-%, more preferably from 5.0 to 18.0 wt.-%, still more preferably from 6.0 to 15.0 wt.-%, based on the total weight of the polyethylene component.

The polyethylene component preferably has a melt flow rate $MFR_2$ of from 0.1 to 5.0 g/10 min, more preferably from 0.5 to 4.0 g/10 min, still more preferably from 1.0 to 3.0 g/10 min, determined according to ISO 1133 at a load of 2.16 kg and a temperature of 190°C

The polyethylene component is preferably obtainable by polymerization in the presence of a single site catalyst system. The single site catalyst system preferably comprises catalytically active metallocene compound or complex combined with a cocatalyst. Suitable cocatalysts are metal alkyl compounds and especially aluminium alkyl compounds known in the art. Especially suitable activators used with metallocene catalysts are alkylaluminium oxy-compounds, such as methylaluminoxane (MAO), tetraisobutylalumoxane (TIBAO) or hexaisobutylalumoxane (HIBAO).

Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

The second mixed-plastics polyethylene recycling blend (B) has a melt flow rate of from 0.30 to 4.0 g/10 min, preferably from 0.50 to 3.5 g/10 min, more preferably from 1.00 to 3.0 g/10 min, determined according to ISO 1133 at 190°C and 2.16 kg.

Further, the second mixed-plastics polyethylene recycling blend (B) preferably has a melt flow rate $MFR_{21}$ of from 25.0 to 100.0 g/10 min, more preferably from 40.0 to 85.0 g/10 min, still more preferably from 50.0 to 75.0 g/10 min, determined according to ISO 1133 at 190°C and 21.6 kg.

Additionally, the second mixed-plastics polyethylene recycling blend (B) has a flow rate ratio $FRR_{21/2}$, being the ratio of $MFR_{21}/MFR_2$, of from 15 to 40, preferably from 17 to 37, more preferably from 20 to 35.

The low flow rate ratio indicates that the second mixed-plastics polyethylene recycling blend (B) has very low amounts of long chain branching components, such as low density polyethylene (LDPE) components.

Further, the second mixed-plastics polyethylene recycling blend (B) has a density of from 910.0 to 925.0 kg/m$^3$, preferably from 912.0 to 922.0 kg/m$^3$, most preferably from 915.0 to 920.0 kg/m$^3$, determined according to ISO 1183.

The second mixed-plastics polyethylene recycling blend (B) has a total amount of ethylene units (C2 units) of from 80.00 to 95.00 wt.-%, preferably from 85.00 to 94.50 wt.-%, most preferably from 87.50 to 94.00 wt.-%, determined by quantitative $^{13}C\{^1H\}$ NMR measurement.

Further, the second mixed-plastics polyethylene recycling blend (B) comprises

- a total amount of continuous units having 3 carbon atoms corresponding to polypropylene (continuous C3 units) of from 1.50 to 7.50 wt.-%, more preferably from 2.00 to 6.50 wt.-%, most preferably from 3.00 to 5.50 wt.-%;
- a total amount of units having 3 carbon atoms as isolated C3 units (isolated C3 units) of from 0 to 0.50 wt.-%, more preferably from 0 to 0.35 wt.-%, most preferably from 0 to 0.25 wt.-%;
- a total amount of units having 4 carbon atoms (C4 units) of from 0.10 to 3.50 wt.-%, more preferably from 0.25 to 3.00 wt.-%, most preferably from 0.50 to 2.50 wt.-%;
- a total amount of units having 6 carbon atoms (C6 units) of from 1.50 to 7.50 wt.-%, more preferably from 2.00 to 6.50 wt.-%, most preferably from 3.00 to 5.50 wt.-%;
- a total amount of units having 7 carbon atoms (C7 units) of from 0 to 0.25 wt.-%, of from 0 to 0.20 wt.-%, most preferably of from 0 to 0.15 wt.-%, and
- a LDPE content of from 0 to 0.25 wt.-%, more preferably from 0 to 0.20 wt.-%, most preferably from 0 to 0.15 wt.-%.

The total amounts of C2 units, continuous C3 units, isolated C3 units, C4 units, C6 units, C7 units and LDPE content thereby are based on the total weight amount of monomer units in the second mixed-plastics polyethylene recycling blend (B) and are measured or calculated according to quantitative $^{13}C\{^1H\}$ NMR measurement.

It is preferred that the second mixed-plastics polyethylene recycling blend (B) does not comprise carbon black. It is especially preferred that the second mixed-plastics polyethylene recycling blend (B) does also not comprise any pigments other than carbon black. In this case, the second mixed-plastics polyethylene recycling blend (B) may be a natural second mixed-plastics polyethylene recycling blend (B), i.e., no pigments (including carbon black) are included in the components of the second mixed-plastics polyethylene recycling blend (B).

The second mixed-plastics polyethylene recycling blend (B) may also include:

a) 0 to 10 wt.-% units derived from alpha olefin(s),
b) 0 to 3.0 wt.-% stabilizers,
c) 0 to 3.0 wt.-% talc,
d) 0 to 3.0 wt.-% chalk,
e) 0 to 6.0 wt.-% further components

wherein all percentages relate to the second mixed-plastics polyethylene recycling blend (B).

Radical initiator

In one embodiment the mixed-plastics polyethylene composition further comprises a radical initiator.

In said embodiment, the radical initiator is present in the mixed-plastics polyethylene composition in an amount of from 0.0001 to 5.0 wt.-%, preferably from 0.0001 to 3.5 wt.-%, more preferably from 0.001 to 2.5 wt.-%, based on the overall weight of the mixed-plastics polyethylene composition.

The radical initiator can be added to the mixed-plastics composition in pure form or in form of a masterbatch.

When added in pure form, the radical initiator is preferably present in the mixed-plastics composition in an amount of from 1 to 5000 ppm, more preferably from 10 to 2500 ppm, still more preferably from 20 to 1000 ppm, based on the overall weight of the mixed-plastics polyethylene composition.

When added in form of a masterbatch, the masterbatch is preferably present in the mixed-plastics composition in an amount of from 0.01 to 5.0 wt.-%, more preferably from 0.05 to 3.5 wt.-%, still more preferably from 0.1 to 2.5 wt.-%, based on the overall weight of the mixed-plastics polyethylene composition.

The amount of masterbatch is preferably chosen as such that the effective amount of radical initiator is preferably from 1 to 5000 ppm, more preferably from 10 to 2500 ppm, still more preferably from 20 to 1000 ppm, based on the overall weight of the mixed-plastics polyethylene composition.

In another embodiment, the mixed-plastics polyethylene composition does not comprise a radical initiator.

It is preferred that the mixed-plastics polyethylene composition comprises the radical initiator.

The radical initiator may be selected from any radical initiator suitable for applications for polyethylene polymers. Preferably, the radical initiator is a carbon-carbon free radical compound, an azo compound, a stable nitroxyl compound, a sterically hindered NO-acyl compound or a peroxy compound, more preferably a peroxy compound. A preferred peroxy compound is selected from the group consisting of acyl peroxide, alkyl peroxide, hydroperoxide, perester, peroxycarbonate, and combinations thereof.

In preferred embodiments, the radical initiator is selected from the group consisting of ditert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tertbutylperoxyisopropyl)benzene, 2,5-dimethyl-2,5-di(benzoylperoxy)hexane, 1,1-di(tertbutylperoxy) cyclohexane, 1,1-di(tert amylperoxy)cyclohexane, and combinations thereof, 2,5-di(tert-butylperoxy)-2,5-dimethylhexane being most preferred.

The radical initiator may be added to the mixed-plastics polyethylene composition in a solid or liquid form. The radical initiator is preferably added to the mixed-plastics polyethylene composition in a form of a pre-mixture (masterbatch). Preferably, the radical initiator is pre-mixed with a carrier which can be a polymer, e.g., polyethylene or polypropylene, or other materials, e.g., silica or $CaCO_3$, forming a masterbatch. A suitable masterbatch is a polypropylene-based peroxide masterbatch containing 5 wt.-% of 2,5-dimethyl 2,5-di(tert-butylperoxy) hexane (commercial name Trigonox® 101, produced and supplied by Nouryon Polymer chemistry).

It is preferred that the radical initiator is added to the first mixed-plastics polyethylene recycling blend (A) and the second mixed-plastics polyethylene recycling blend (B) in a first step so that the first mixed-plastics polyethylene recycling blend (A) and the second mixed-plastics polyethylene recycling blend (B) are modified in the presence of the radical initiator. In a second step the mixture of the modified first mixed-plastics polyethylene recycling blend (A) and the modified second mixed-plastics polyethylene recycling blend (B) is blended optionally in the presence of the additives.

In some embodiments, the radical initiator is added to the first mixed-plastics polyethylene recycling blend (A) and the second mixed-plastics polyethylene recycling blend (B) contained in a reactor, or it is added to a reactor concurrently with the addition of the first mixed-plastics polyethylene recycling blend (A) and the second mixed-plastics polyethylene recycling blend (B).

In one embodiment, the reactor is a flow-through reactor, such as a horizontal mixer with paddle stirrer, preferably in a continuous mode. The first mixed-plastics polyethylene recycling blend (A) and the second mixed-plastics polyethylene recycling blend (B) and the radical initiator may be added in parallel streams into a flow-through reactor. Preferably, the flow-through reactor is a horizontal flow-through reactor, and the components may be transported through the reactor by means of transporting paddles. In this way, very efficient absorption of the radical initiator by the first mixed-plastics polyethylene recycling blend (A) and the second mixed-plastics polyethylene recycling blend (B) is reached.

In alternative embodiments, other reactors may be used, where, for example, the radical initiator is added to a reactor after the first mixed-plastics polyethylene recycling blend (A) and the second mixed-plastics polyethylene recycling blend (B) have been placed therein.

In some embodiments, the radical initiator is added to the first mixed-plastics polyethylene recycling blend (A) and the second mixed-plastics polyethylene recycling blend (B) contained in a melt processing unit. In case the first mixed-plastics polyethylene recycling blend (A) and the second mixed-plastics polyethylene recycling blend (B) are melted before adding the radical initiator. The addition of the radical initiator to the first mixed-plastics polyethylene recycling blend (A) and the second mixed-plastics polyethylene recycling blend (B) may be performed at a higher temperature in the range of e.g., from 150 to 250 °C, such as from 160 to 240 °C.

Process

In a second aspect the present invention the present invention relates to a process for preparing the mixed-plastics polyethylene composition as described above or below, comprising the steps of:

a) providing a first mixed-plastics polyethylene recycling blend (A) in an amount of 50.00 to 99.00 wt.-%, preferably 55.00 to 95.00 wt.-%, more preferably 60.00 to 90.00 wt.-%, based on the overall weight of the composition, wherein at least 92 wt.-%, preferably at least 95 wt.-%, more preferably 100 wt.-% of the first mixed-plastics polyethylene recycling blend (A) originates from post-consumer waste and/or post-industrial waste; and wherein the first mixed-plastics polyethylene recycling blend (A) has

- a melt flow rate $MFR_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio $FRR_{21/2}$, being the ratio of $MFR_{21}/MFR_2$, of from more than 40 to 100, such as from 45 to 100,

preferably from 60 to 95, more preferably from 70 to 90;

- a density of from 915.0 to 945.0 kg/m³, preferably from 917.0 to 942.0 kg/m³, most preferably from 920.0 to 940.0 kg/m³, determined according to ISO 1183; and
- a total amount of ethylene units (C2 units) of from 92.50 to 99.90 wt.-%, preferably from 95.00 to 99.75 wt.-%, most preferably from 96.50 to 99.50 wt.-%, based on the overall weight of the blend (A) and determined by quantitative $^{13}C\{^1H\}$ NMR measurement;

b) providing a second mixed-plastics polyethylene recycling blend (B) in an amount of 1.00 to 49.00 wt.-%, preferably 4.95 to 42.50 wt.-%, more preferably 9.95 to 38.00 wt.-%, based on the overall weight of the composition, wherein from 80 to 97 wt.-%, preferably from 85 to 95 wt.-% wt.-%, more preferably from 87 to 93 vnt.-% of the second mixed-plastics polyethylene recycling blend (B) originates from post-consumer waste and/or post-industrial waste; and wherein the second mixed-plastics polyethylene recycling blend (B) has

- a melt flow rate MFR₂ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio FRR₂₁/₂, being the ratio of MFR₂₁/MFR₂, of from 15 to 40, preferably from 17 to 37, more preferably from 20 to 35;
- a density of from 910.0 to 925.0 kg/m³, preferably from 912.0 to 922.0 kg/m³, most preferably from 915.0 to 920.0 kg/m³, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (B) and determined by quantitative $^{13}C\{^1H\}$ NMR measurement;

c) optionally providing a radical initiator, optionally in form of a masterbatch in the presence of a carrier polymer, in an amount of from 0 to 5.0 wt.-%, preferably from 0.0001 to 3.5 wt.-%, more preferably from 0.001 to 2.5 wt.-%, based on the overall weight of the composition;
d) melting and mixing the mixed-plastics polyethylene recycling blend (A), the mixed-plastics polyethylene recycling blend (B) and optionally the radical initiator in an extruder, optionally a twin screw extruder, and
e) optionally pelletizing the obtained mixed-plastics polyethylene composition.

All preferred aspects, definitions and embodiments as described above shall also hold for the process.

When present, the radical initiator is preferably added to the first mixed-plastics polyethylene recycling blend (A) and the second mixed-plastics polyethylene recycling blend (B) prior to step d).

The radical initiator may be added to the first mixed-plastics polyethylene recycling blend (A) and the second mixed-plastics polyethylene recycling blend (B) in a solid or liquid form. The radical initiator is preferably added to the first mixed-plastics polyethylene recycling blend (A) and the second mixed-plastics polyethylene recycling blend (B) in a form of a pre-mixture (masterbatch). Preferably, the radical initiator is pre-mixed with a carrier which can be a polymer, e.g., polyethylene or polypropylene, or other materials, e.g., silica or CaCO₃, forming a masterbatch. A suitable masterbatch is a polypropylene-based peroxide masterbatch containing 5 wt.-% of 2,5-dimethyl 2,5-di(tert-butylperoxy) hexane (commercial name Trigonox® 101, produced and supplied by Nouryon Polymer chemistry).

In some embodiments, the radical initiator is added to the first mixed-plastics polyethylene recycling blend (A) and the second mixed-plastics polyethylene recycling blend (B) contained in a reactor, or it is added to a reactor concurrently with the addition of the first mixed-plastics polyethylene recycling blend (A) and the second mixed-plastics polyethylene recycling blend (B).

In one embodiment, the reactor is a flow-through reactor, such as a horizontal mixer with paddle stirrer, preferably in a continuous mode. The first mixed-plastics polyethylene recycling blend (A) and the second mixed-plastics polyethylene recycling blend (B) and the radical initiator may be added in parallel streams into a flow-through reactor. Preferably, the flow-through reactor is a horizontal flow-through reactor, and the components may be transported through the reactor by means of transporting paddles. In this way, very efficient absorption of the radical initiator by the first mixed-plastics polyethylene recycling blend (A) and the second mixed-plastics polyethylene recycling blend (B) is reached.

In alternative embodiments, other reactors may be used, where, for example, the radical initiator is added to a reactor after the first mixed-plastics polyethylene recycling blend (A) and the second mixed-plastics polyethylene recycling blend (B) have been placed therein.

In some embodiments, the radical initiator is added to the first mixed-plastics polyethylene recycling blend (A) and the second mixed-plastics polyethylene recycling blend (B) contained in a melt processing unit. In case first mixed-plastics polyethylene recycling blend (A) of step a) and the second mixed-plastics polyethylene recycling blend (B) of step b) are mixed and melted prior to adding the radical initiator to the first mixed-plastics polyethylene recycling blend (A) and the second mixed-plastics polyethylene recycling blend (B). The step of adding the radical initiator to the first mixed-plastics polyethylene recycling blend (A) and the second mixed-plastics polyethylene recycling blend (B) may be performed at a higher temperature in the range of e.g., from 150 to 250 °C, such as from 160 to 240 °C.

In another embodiment, no radical initiator is added to mixed-plastics polyethylene composition. In said embodiment, optional process step c) is omitted.

In step d) of the process of the present invention, the first mixed-plastics polyethylene recycling blend (A), the second mixed-plastics polyethylene recycling blend (B) and optionally the radical initiator are melted and mixed.

Preferably, the melting and mixing step d) is carried out by compounding, such as extrusion. The preferred temperature range for compounding, preferably extrusion is from 150 to 250 °C, more preferably from 160 to 240 °C, even more preferably from 165 to 230 °C and most preferably from 170 to 225 °C. During extrusion, the first mixed-plastics polyethylene recycling blend (A) and the second mixed-plastics polyethylene recycling blend (B) are generally melted.

Extrusion may be carried out in any conventional way known in the art. Preferably, extrusion is carried out in a continuous melt mixing device like a single screw extruder, a co-rotating twin screw extruder or a co-kneader. The barrel temperature is preferably in the range of from 150 to 250 °C. The screw speed of the melt mixing device preferably is adjusted to a range of from 100 to 750 rotations per minute (rpm), preferably 100 to 500 rpm and more preferably 100 to 300 rpm.

More preferably, the melt mixing device includes a feed zone, a kneading zone and a die zone and a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of from 150 to 250 °C. Barrel temperature T2 (in the kneading zone) preferably is in the range of from 150 to 250 °C. Barrel temperature T3 (in the die zone) preferably is in the range of from 150 to 250 °C.

In one embodiment, the first mixed-plastics polyethylene recycling blend (A), the second mixed-plastics polyethylene recycling blend (B) and optionally additives are melted and mixed, preferably by extrusion without the presence of a radical initiator.

In another embodiment, the first mixed-plastics polyethylene recycling blend (A), the second mixed-plastics polyethylene recycling blend (B) and optionally additives are melted and mixed, preferably by extrusion in the presence of a radical initiator.

In the latter embodiment step d) may optionally comprise mixing first mixed-plastics polyethylene recycling blend (A), the second mixed-plastics polyethylene recycling blend (B) and the radical initiator prior to extrusion. Mixing is preferably carried out by contacting the components for a time of at least 2 minutes, preferably a time in the range of from 5 to 30 min, more preferably from 8 to 25 min, in order to reach relatively homogeneous absorption of the radical initiator by the first mixed-plastics polyethylene recycling blend (A) and the second mixed-plastics polyethylene recycling blend (B). Mixing is preferably performed at a temperature in the range of from 20 to 90 °C, more preferably from 40 to 80 °C. Highly homogeneous adsorption is reached e.g., in a flow-through reactor as described above. After mixing, the first mixed-plastics polyethylene recycling blend (A), the second mixed-plastics polyethylene recycling blend (B) and the radical initiator may be kept in contact, for e.g. one or more hours, for soaking of the radical initiator by the first mixed-plastics polyethylene recycling blend (A) and the second mixed-plastics polyethylene recycling blend (B), before extrusion.

In a preferred embodiment, one part or the entire process of the present invention is performed as a continuous process under the use of the flow-through reactors described above, and with direct transport of the composition of the first mixed-plastics polyethylene recycling blend (A), the second mixed-plastics polyethylene recycling blend (B) and the radical initiator into an extruder. In the extruder the composition of the first mixed-plastics polyethylene recycling blend (A), the second mixed-plastics polyethylene recycling blend (B) and the radical initiator is compounded optionally with the additives.

*Further process steps*

In addition to the steps a) to d), further steps may be comprised in the process of the present invention.

Subsequent to step d), the mixed-plastics polyethylene composition may be pelletized, e.g., either in an underwater pelletizer or after solidification of one or more strands in a suitable pelletization process. Suitable pelletization processes include underwater pelletization, water-ring pelletization and strand pelletization, the latter comprising solidification of one or more melt strands in a water bath followed by cutting the strand into pellets.

In some embodiments, the process is carried out without pelletization. For example, the melting and mixing step may be carried out on the extrusion line of the film preparation, and the mixed-plastics polyethylene composition is directly processed to a film layer.

<u>Article</u>

In a third aspect the present invention relates to an article comprising the mixed-plastics polyethylene composition as described above or below, preferably in an amount of from 90 to 100 wt.-%, more preferably from 95 to 100 wt.-%, based on the total weight of the article.

Said article is preferably a film, more preferably a cast film or a blown film.

All preferred aspects, definitions and embodiments as described above shall also hold for the article.

The article is preferably a film, more preferably a cast film or a blown film.

The film according to the present invention comprises at least one layer comprising the mixed-plastics polyethylene composition, in any of the embodiments depicted above. The film can be a monolayer film comprising the mixed-plastics polyethylene composition or a multilayer film, wherein at least one layer comprises the mixed-plastics polyethylene composition. The terms "monolayer film" and "multilayer film" have well known meanings in the art.

The article according to the present invention is preferably a packaging film, i.e., it may be used in various packaging applications, in particular for secondary packaging, which do not require a food approval, or even for primary packaging for non-food products.

Furthermore, the article according to the present invention may be used as a layer in multilayer polyethylene-based blown films, preferably as core layer in multilayer polyethylene-based blown films.

The film, especially the monolayer film, preferably has a film thickness of from 5 to 150 $\mu$m, more preferably from 10 to 125 $\mu$m, still more preferably from 20 to 100 $\mu$m.

In case of a multilayer film, the layer comprising mixed-plastics polyethylene composition according to the invention preferably has a film thickness of from 5 to 150 $\mu$m, more preferably from 10 to 125 $\mu$m, still more preferably from 20 to 100 $\mu$m.

The film, especially the monolayer film, preferably comprises the mixed-plastics polyethylene composition according to the invention in an amount of from 90 to 100 wt.-%, more preferably from 95 to 100 wt.-%, based on the total weight of the film, preferably the monolayer film.

In case of a multilayer film, the layer comprising mixed-plastics polyethylene composition according to the invention preferably comprises the mixed-plastics polyethylene composition according to the invention in an amount of from 90 to 100 wt.-%, more preferably from 95 to 100 wt.-%, based on the total weight of the layer.

The article, preferably the film, surprisingly shows a superior balance of properties in regard of low gel count, good mechanical properties, good impact properties and good optical properties.

The article, preferably the film, preferably has a gel index of from 100 to 20,000, more preferably from 250 to 10,000, still more preferably from 400 to 2,500.

Further, the article, preferably the film, preferably has a gel content having a size of from 100 to 299 $\mu$m of from 35,000 to 500,000 / m$^2$, more preferably from 45,000 to 350,000 / m$^2$, still more preferably from 50,000 to 200,000 /m$^2$.

Still further, the article, preferably the film, preferably has a gel content having a size of from 300 to 599 $\mu$m of from 500 to 25,000 / m$^2$, more preferably from 750 to 10,000 / m$^2$, still more preferably from 1,000 to 5,000 /m$^2$.

Furthermore, the article, preferably the film, preferably has a gel content having a size of from 600 to 999 $\mu$m of from 1 to 50 / m$^2$, more preferably from 2 to 40 / m$^2$, still more preferably from 3 to 30 /m$^2$.

Moreover, the article, preferably the film, preferably has a gel content having a size of 1000 $\mu$m and more of from 0 to 10 / m$^2$, more preferably from 0 to 5 / m$^2$, still more preferably from 0 to 2 /m$^2$.

The gel contents and the gel index are all determined by using a gel counting apparatus as described in the experimental part below on cast films with a thickness of 70 $\mu$m and a width of approximately 110 mm.

Further, the article, preferably the film, preferably has a tensile modulus in machine direction of from 100 to 400 MPa, more preferably from 125 to 350 MPa, still more preferably from 150 to 300 MPa, determined according to ISO 527-3 on blown films having a thickness of 40 $\mu$m.

Still further, the article, preferably the film, preferably has a tensile modulus in transverse direction of from 100 to 400 MPa, more preferably from 125 to 350 MPa, still more preferably from 150 to 300 MPa, determined according to ISO 527-3 on blown films having a thickness of 40 $\mu$m.

Furthermore, the article, preferably the film, preferably has a haze of from 10% to 50%, preferably from 15% to 45%, more preferably from 20% to 40%, determined according to ASTM D1003 on blown films having a thickness of 40 $\mu$m.

Additionally, the article, preferably the film, preferably has a dart drop impact of from 100 to 250 g, more preferably from 115 to 200 g, still more preferably from 125 to 175 g, determined according to ISO 7765-1:1988 / Method A on blown films having a thickness of 40 $\mu$m.

Use

In a fourth aspect the present invention relates to the use of a mixed-plastics polyethylene composition as described above or below for the production of a film, preferably for the production of a packaging film, with an amount of from 90.0 to 99.7 wt.-%, preferably from 92.5 to 99.0 wt.-%, more preferably from 95.0 to 98.5 wt.-%, based on the overall weight of the film, of components originating from post-consumer waste and/or post-industrial waste.

All preferred aspects, definitions and embodiments as described above shall also hold for the use.

The invention will be further described with reference to the following non-limiting examples.

**Examples**

**1. Measurement methods**

The following definitions of terms and determination methods apply for the above general description of the invention as well as to the below examples, unless otherwise defined.

_Melt Flow Rates (MFR$_2$, MFR$_{21}$)_

The melt flow rate (MFR) was determined according to ISO 1133 and is indicated in g/10 min. The MFR was determined at 190 °C for polyethylene. MFR may be determined at different loadings such as 2.16 kg (MFR$_2$), 5 kg (MFR$_5$) or 21.6 kg (MFR$_{21}$).

The flow rate ratio (FRR) was calculated as the ratio of the melt flow rates at different loadings. The FRR $_{21/2}$ is the ratio of MFR$_{21}$/MFR$_2$.

_Density_

Density of the polymer was measured according to ISO 1183-1 on compression molded specimen prepared according to EN ISO 1872-2 (February 2007) and is given in kg/m$^3$. The density of the composition can be calculated from the densities of blends (A) and (B) according to:

$$density_{comp} = (density_A \cdot wt_A) + (density_B \cdot wt_B)$$

with

density$_{comp}$ = density of the mixed plastics polyethylene composition
density$_A$ = density of the blend (A)
wt$_A$ = weight fraction of blend (A) in the mixed plastics polyethylene composition
density$_B$ = density of the blend (B)
wt$_B$ = weight fraction of blend (B) in the mixed plastics polyethylene composition.

_Tensile Modulus_

Tensile modulus (E-Mod (MPa)) was measured in machine direction (MD) and/or transverse direction (TD) according to ISO 527-3 on film samples prepared as described under the Film Sample preparation with film thickness of 40 $\mu$m and at a cross head speed of 1 mm/min for the modulus.

_Dart drop impact_

ISO 7765-1:1988 / Method A

This test method covers the determination of the energy that causes films to fail under specified conditions of impact of a free-falling dart from a specified height that would result in failure of 50 % of the specimens tested (Staircase method A). A uniform missile mass increment was employed during the test and the missile weight was decreased or increased by the uniform increment after test of each specimen, depending upon the result (failure or no failure) observed for the specimen.

Standard conditions:

Conditioning time: > 96 h
Test temperature: 23 °C
Dart head material: phenolic

Dart diameter: 38 mm
Drop height: 660 mm

Results:

- Impact failure mass [g]
- Minimum thickness [mm]
- Maximum thickness [mm]

Testing according to ISO7765-1:1988 / Method A was carried out film samples prepared as described under the Film Sample preparation with film thickness of 40 $\mu$m and reported in gram (g).

DDI per unit thickness (in g/micron) was calculated by dividing DDI (in gram) to the thickness of film (in micron).

*Haze*

Haze was measured according to ASTM D1003-00 on film samples prepared as described under the Film Sample preparation with film thickness of 40 $\mu$m.

*Quantification of C2, iPP (continuous C3), LDPE and polyethylene short chain branches in polyethylene based recyclates*

Quantitative $^{13}C\{^1H\}$ NMR spectra were recorded in the solution-state using a Bruker Avance II 400MHz NMR spectrometer operating at 400.15 and 100.62 MHz for $^1H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of *1,2-tetrachloroethane-$d_2$* (TCE-$d_2$) along with chromium-(III)-acetylacetonate (Cr(acac)$_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme {zhou07,busico07}. A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), $\gamma$-carbons (g 29.6 ppm) the 4s and the threeB4 carbon (to be compensated for later on) is taken between 30.9 ppm and 29.3 ppm excluding the T$\beta\beta$ from polypropylene. The amount of C2 related carbons was quantified using all mentioned signals according to the following equation:

$$fC_{C2total} = (Iddg - ItwoB4) + (IstarB1*6) + (IstarB2*7) + (Itwob4*9) + I(threeB5*10) + ((IstarB4plus-TtwoB4-IthreB5)*7 + (I3s*3)$$

Characteristic signals corresponding to the presence of polypropylene (iPP, continuous C3)) were observed at 46.7 ppm, 29.0 ppm and 22.0 ppm. The amount of PP related carbons was quantified using the integral of S$\alpha\alpha$ at 46.6 ppm:

$$fC_{PP} = Is\alpha\alpha * 3$$

The weight percent of the C2 fraction and the polypropylene can be quantified according following equations:

$$wt_{C2fraction} = fC_{C2total} * 100 / (fC_{C2total} + fC_{PP})$$

$$wt_{PP} = fC_{PP} * 100 / (fC_{C2total} + fC_{PP})$$

Characteristic signals corresponding to various short chain branches were observed and their weight percentages quantified as the related branch would be an alpha-olefin, starting by quantifying the weight fraction of each:

$$fwtC2 = fC_{C2total} - ((IstarB1*3) - (IstarB2*4) - (ItwoB4*6) - (IthreeB5*7)$$

$$fwtC3 \text{ (isolated C3)} = IstarB1*3$$

$$fwtC4 = IstarB2*4$$

$$fwtC6 = ItwoB4*6$$

$$fwtC7 = IthreeB5*7$$

Normalization of all weight fractions leads to the amount of weight percent for all related branches:

$$fsum_{wt.-\%total} = fwtC2 + fwtC3 + fwtC4 + fwtC6 + fwtC7 + fC_{PP}$$

$$wtC2total = fwtC2 * 100 / fsum_{wt.-\%total}$$

$$wtC3total = fwtC3 * 100 / fsum_{wt.-\%total}$$

$$wtC4total = fwtC4 * 100 / fsum_{wt.-\%total}$$

$$wtC6total = fwtC6 * 100 / fsum_{wt.-\%total}$$

$$wtC7total = fwtC7 * 100 / fsum_{wt.-\%total}$$

The content of LDPE can be estimated assuming the B5 branch, which only arises from ethylene being polymerized under high pressure process, being almost constant in LDPE. We found the average amount of B5 if quantified as C7 at 1.46 wt.-%. With this assumption it is possible to estimate the LDPE content within certain ranges (approximately between 20 wt.-% and 80 wt.-%), which are depending on the SNR ratio of the threeB5 signal:

$$wt.-\% \text{ LDPE} = wtC7total * 100 / 1.46$$

References:

zhou07          Zhou, Z., Kuemmerle, R., Qiu, X., Redwine, D., Cong, R., Taha, A., Baugh, D. Winniford, B., J. Mag. Reson. 187 (2007) 225.
busico07        Busico, V., Carbonniere, P., Cipullo, R., Pellecchia, R., Severn, J., Talarico, G., Macromol. Rapid Commun. 2007, 28, 1128.
singh09         Singh, G., Kothari, A., Gupta, V., Polymer Testing 28 5 (2009), 475.
randall89       J. Randall, Macromol. Sci., Rev. Macromol. Chem. Phys. 1989, C29, 201.
brandolini00    A. J. Brandolini, D. D. Hills, NMR Spectra of Polymers and Polymer Additives, Marcel Dekker Inc., 2000.

*Gel content and gel index*

The gel content was measured via gel count with a gel counting apparatus consisting of a measuring extruder, ME 25 / 5200 V1, 25*25D, with five temperature conditioning zones adjusted to a temperature profile of 170/180/190/190/190°C, an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count measurements, the materials were extruded at a screw speed of 30 rounds per minute, a drawing speed of 3-3.5 m/min and a chill roll temperature of 50°C to make thin cast films with a thickness of 70 $\mu$m and a width of approximately 110 mm. The resolution of the camera is 25 $\mu$m x 25 $\mu$m on the film. The camera works in transmission mode with a constant grey value (auto.set. margin level = 170). The system is able to decide between 256 grey values from black = 0 to white = 256. For detecting gels, a sensitivity level dark of 25% is used. For each material the average number of gel dots on a film surface area of 10 m$^2$ was inspected by the line camera. The line camera was set to differentiate the gel dot size according to the following:

Gel size (the size of the longest dimension of a gel)
Size class 1: 100 to 299 $\mu$m
Size class 2: 300 $\mu$m to 599 $\mu$m
Size class 3: 600 $\mu$m to 999 $\mu$m
Size class 4: 1000 $\mu$m and more
The gel counts for the gels of the different size classes were measured and are given as counts per m$^2$. They represent the gel content of the respective size classes. The total gel content is the sum of these gel contents.

For the determination of the gel index, the counts in the respective size classes were multiplied with a particular weigh factor as given below. The sum of the counts of each size class multiplied with the weight factor represents the gel index (GI).

| Size class 1: | 100 to 299 $\mu$m | weight factor: | 0.1 |
| Size class 2: | 300 $\mu$m to 599 $\mu$m | weight factor: | 1.0 |
| Size class 3: | 600 $\mu$m to 999 $\mu$m | weight factor: | 5.0 |
| Size class 4: | 1000 $\mu$m and more | weight factor: | 10.0 |

Example:

| Size class 1: | 17 counts | x weight factor: 0.1 | = 1.7 |
| Size class 2: | 5 counts | x weight factor: 1.0 | = 5.0 |
| Size class 3: | 2 counts | x weight factor: 5.0 | = 10.0 |
| Size class 4: | 0 counts | x weight factor: 10.0 | = 0.0 |
| | | gel index (GI) = sum | = 16.7 |

*Limonene measurement*

Limonene quantification was carried out using solid phase micro-extraction (HS-SPME-GC-MS) by standard addition.

50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion 93 acquired in SIM mode was used. Enrichment of the volatile fraction was carried out by headspace solid phase micro-extraction with a 2 cm stable flex 50/30 pm DVB/Carboxen/PDMS fibre at 60 °C for 20 minutes. Desorption was carried out directly in the heated injection port of a GCMS system at 270 °C.

GCMS Parameters:

Column: 30 m HP 5 MS 0.25*0.25
Injector: Splitless with 0.75 mm SPME Liner, 270 °C
Temperature program: -10°C (1 min)
Carrier gas: Helium 5.0, 31 cm/s linear velocity, constant flow
MS: Single quadrupole, direct interface, 280 °C interface temperature
Acquisition: SIM scan mode
Scan parameter: 20-300 amu
SIM Parameter: m/Z 93, 100 ms dwell time

## Film sample preparation

The test films consisting of the inventive compositions and respective comparative compositions of 40 $\mu$m thickness, were prepared using a Collin 30 lab scale mono layer blown film line. The film samples were produced at 190 °C, a 1:2.5 blow-up ratio, a frostline distance of 120 mm and an uptake speed of 7.6 m/min. Blending was done in a ZSK 18 twin screw extruder.

## 2. Experiments

### Materials used

Blend (A)   as first mixed-plastics recycling blend (A) CWT100LG was used. CWT100LG is a low density polyethylene rich post-consumer recyclate blend, available from Borealis. The properties of blend (A) are shown in Table A:

Blend (B)   as second mixed-plastics recycling blend (B) NAV 198-1 was used. NAV 198-1 is a post-consumer recyclate blend of low density comprising 10 wt.-% virgin linear low density polyethylene, available from Ecoplast Kunststoffrecycling GmbH. The properties of blend (B) are shown in Table A:

**Table A:** Properties of blend (A) and blend (B)

|  | Blend (A) | Blend (B) |
|---|---|---|
| Amount of post-consumer waste (wt.-%) | 100 | 90 |
| Ethylene content (wt.-%) | 93.3 | 89.3 |
| isol. $C_3$ content (wt.-%) | 0.2 | 0.1 |
| $C_4$ content (wt.-%) | 1.5 | 1.7 |
| $C_6$ content (wt.-%) | 3.2 | 4.5 |
| $C_7$ content (wt.-%) | 0.7 | 0 |
| iPP content (wt.-%) | 0.9 | 4.4 |
| LDPE content (wt.-%) | 59 | n.c. |
| Density (kg/m$^3$) | 925 | 918 |
| $MFR_2$ (g/10 min) | 0.25 | 2.23 |
| $MFR_{21}$ (g/10 min) | 20.38 | 61.25 |
| $FRR_{21/2}$ | 81.5 | 27.5 |
| Limonene content (mg/kg) | >0.1 | >0.1 |
| n.c. = not calculable, i.e. below detection limit | | |

POX   A polypropylene-based peroxide masterbatch containing 5 wt.-% of 2,5-Dimethyl 2,5-di(tert-butylperoxy) hexane (commercial name Trigonox® 101, produced and supplied by Nouryon Polymer chemistry) was used as the radical initiator.

*Preparation and properties of examples CE1, CE2, IE1 and IE2*

For the composition of IE2 blends (A) and (B) were premixed with POX in a high speed mixer, then the mixture was stored at room temperature overnight in a tight container, to let the pellets to soak the radical initiator masterbatch completely.

The compounding was done in a ZSK 18 twin screw extruder, the screw speed was 120 rpm, at temperature T1=170 °C, T2=205 °C, T3=210 °C, and melt T=210 °C. The production rate was 7 kg/h. The melt was cooled and pelletized.

Blown film samples and cast film samples were prepared from the pellets of the compositions of examples CE1, CE2, IE1 and IE2 as described above.

Tensile modulus, DDI and haze were measured on said blown film samples.

Gel count was measured on cast film samples.

The compositions and the properties of examples CE1, CE2, IE1 and IE2 are listed in Table 1 below.

Table 1 Compositions and the properties of examples CE1, CE2, IE1 and IE2

|  |  | CE1 | CE2 | IE1 | IE2 |
|---|---|---|---|---|---|
| **Compositions** | | | | | |
| Blend (A) | (wt.-%) | 100 | - | 70 | 69 |
| Blend (B) | (wt.-%) | - | 100 | 30 | 30 |
| POX | (wt.-%) | - | - | - | 1 |
| **Properties** | | | | | |
| $MFR_2$ | (g/10 min) | 0.25 | 2.15 | 0.48 | 0.27 |
| $MFR_{21}$ | (g/10 min) | 20.38 | 58.96 | 27.15 | 21.34 |
| $FRR_{21/5}$ | (-) | 81.5 | 27.4 | 56.6 | 79.0 |
| Density | (kg/m$^3$) | 925 | 918 | 923 (calc.) | n.m. |
| Gel count, size class 1 | (1/m$^2$) | 68398 | 3632868 | 169440 | 78514 |
| Gel count, size class 2 | (1/m$^2$) | 1504.6 | 32292 | 3458.3 | 2103.3 |
| Gel count, size class 3 | (1/m$^2$) | 1.54 | 1.54 | 21.6 | 21.6 |
| Gel count, size class 4 | (1/m$^2$) | 0 | 0 | 0 | 0 |
| Gel index | (1/m$^2$) | 540.8 | 25614 | 1328.0 | 651.6 |
| TM/MD | (MPa) | 205 | 166.7 | 198 | 205 |
| TM/TD | (MPa) | 260 | 191.9 | n.m. | 271 |
| DDI | (g) | 121 | n.m. | 158 | 146 |
| Haze | (%) | 35.3 | 18.1 | 28.7 | 37.9 |
| n.m. = not measured<br>calc. = calculated from the densities of blends (A) and (B) | | | | | |

Inventive example IE1 shows an improved balance of properties in regard of improved impact strength in form of DDI and improved haze at comparable mechanical properties at sufficient gel count compared to comparative example CE1 and improved gel count, mechanical properties at higher haze compared to comparative example CE2.

For further significantly improving the gel count the radical initiator POX has been added to IE2 at the cost of slightly impaired haze.

**Claims**

1. A mixed-plastics polyethylene composition having

• a melt flow rate $MFR_2$ of from 0.10 to 3.00 g/10 min, preferably from 0.15 to 2.50 g/10 min, more preferably from 0.20 to 2.00 g/10 min, determined according to ISO 1133 at 190°C and 2.16 kg; and
• a density of from 915.0 to 930.0 kg/m$^3$, preferably from 918.0 to 928.0 kg/m$^3$, more preferably from 920.0 to 925.0 kg/m$^3$, determined according to ISO 1183;

obtainable by blending and extruding components comprising

a) 50.00 to 99.00 wt.-%, preferably 55.00 to 95.00 wt.-%, more preferably 60.00 to 90.00 wt.-%, based on the overall weight of the composition, of a first mixed-plastics polyethylene recycling blend (A),
wherein at least 92 wt.-%, preferably at least 95 wt.-%, more preferably 100 wt.-% of the first mixed-plastics polyethylene blend (A) originates from post-consumer waste and/or post-industrial; and wherein the first mixed-plastics polyethylene blend (A) has

- a melt flow rate MFR$_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio FRR$_{21/2}$, being the ratio of MFR$_{21}$/MFR$_2$, of from more than 40 to 100, such as from 45 to 100, preferably from 60 to 95, more preferably from 70 to 90;
- a density of from 915.0 to 945.0 kg/m$^3$, preferably from 917.0 to 942.0 kg/m$^3$, most preferably from 920.0 to 940.0 kg/m$^3$, determined according to ISO 1183; and
- a total amount of ethylene units (C2 units) of from 87.50 to 97.50 wt.-%, preferably from 88.50 to 96.50 wt.-%, most preferably from 90.00 to 95.50 wt.-%, based on the overall weight of the blend (A) and determined by quantitative $^{13}$C{$^1$H} NMR measurement; and

b) 1.00 to 49.00 wt.-%, preferably 4.95 to 42.50 wt.-%, more preferably 9.95 to 38.00 wt.-%, based on the overall weight of the composition, of a second mixed-plastics polyethylene recycling blend (B)
wherein from 80 to 97 wt.-%, preferably from 85 to 95 wt.-% wt.-%, more preferably from 87 to 93 wt.-% of the second mixed-plastics polyethylene recycling blend (B) originates from post-consumer waste and/or post-industrial waste; and wherein the second mixed-plastics polyethylene recycling blend (B) has

- a melt flow rate MFR$_2$ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio FRR$_{21/2}$, being the ratio of MFR$_{21}$/MFR$_2$, of from 15 to 40, preferably from 17 to 37, more preferably from 20 to 35;
- a density of from 910.0 to 925.0 kg/m$^3$, preferably from 912.0 to 922.0 kg/m$^3$, most preferably from 915.0 to 920.0.kg/m$^3$, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (B) and determined by quantitative $^{13}$C{$^1$H} NMR measurement.

2. The mixed-plastics polyethylene composition according to claim 1, wherein the first mixed-plastics polyethylene recycling blend (A) has a lower melt flow rate MFR$_2$ than the second mixed-plastics polyethylene recycling blend (B).

3. The mixed-plastics polyethylene composition according to claims 1 or 2, wherein the first mixed-plastics polyethylene recycling blend (A) has a higher density than the second mixed-plastics polyethylene recycling blend (B).

4. The mixed-plastics polyethylene composition according to any one of the preceding claims, wherein the first mixed-plastics polyethylene recycling blend (A) has a melt flow rate MFR$_{21}$ of from 10.0 to 100.0 g/10 min, preferably from 12.0 to 75.0 g/10 min, more preferably from 15.0 to 50.0 g/10 min, determined according to ISO 1133 at 190°C and 21.6 kg.

5. The mixed-plastics polyethylene composition according to any one of the preceding claims, wherein the second mixed-plastics polyethylene recycling blend (B) has a melt flow rate MFR$_{21}$ of from 25 to 100 g/10 min, preferably from 40 to 85 g/10 min, more preferably from 50 to 75 g/10 min, determined according to ISO 1133 at 190°C and 21.6 kg.

6. The mixed-plastics polyethylene composition according to any one of the preceding claims further comprising from 0 to 5.0 wt.-%, preferably from 0.0001 to 3.5 wt.-%, more preferably from 0.001 to 2.5 wt.-%, based on the overall weight of the composition, of a radical initiator, optionally in form of a masterbatch in the presence of a carrier polymer.

7. The mixed-plastics polyethylene composition according to any one of the preceding claims comprising from 90.0 to 99.7 wt.-%, preferably from 92.5 to 99.0 wt.-%, more preferably from 95.0 to 98.5 wt.-%, based on the overall weight of the composition, of components originating from post-consumer waste and/or post-industrial waste.

8. The mixed-plastics polyethylene composition according to any one of the preceding claims having one or more or all of the following properties:

• a melt flow rate $MFR_{21}$ of from 10.0 to 100.0 g/10 min, preferably from 12.0 to 75.0 g/10 min, more preferably from 15.0 to 50.0 g/10 min, determined according to ISO 1133 at 190°C and 21.6 kg;
• a flow rate ratio $FRR_{21/2}$, being the ratio of $MFR_{21}/MFR_2$, of from 35 to 100, preferably from 40 to 95, more preferably from 45 to 90.

9. A process for preparing the mixed-plastics polyethylene composition according to any one of claims 1 to 8, comprising the steps of:

a) providing a first mixed-plastics polyethylene recycling blend (A) in an amount of 50.00 to 99.00 wt.-%, preferably 55.00 to 95.00 wt.-%, more preferably 60.00 to 90.00 wt.-%, based on the overall weight of the composition,
wherein at least 92 wt.-%, preferably at least 95 wt.-%, more preferably 100 wt.-% of the first mixed-plastics polyethylene recycling blend (A) originates from post-consumer waste and/or post-industrial waste; and wherein the first mixed-plastics polyethylene recycling blend (A) has

- a melt flow rate $MFR_2$ of from 0.10 to 2.00 g/10 min, preferably from 0.15 to 1.50 g/10 min, more preferably from 0.20 to 1.00 g/10 min, determined according to ISO 1133 at 190°C and 2.16 kg;
- a flow rate ratio $FRR_{21/2}$, being the ratio of $MFR_{21}/MFR_2$, of from more than 40 to 100, such as from 45 to 100 preferably from 60 to 95, more preferably from 70 to 90;
- a density of from 915 to 945 kg/m$^3$, preferably from 917 to 942 kg/m$^3$, most preferably from 920 to 940 kg/m$^3$, determined according to ISO 1183; and
- a total amount of ethylene units (C2 units) of from 87.50 to 97.50 wt.-%, preferably from 88.50 to 96.50 wt.-%, most preferably from 90.00 to 95.50 wt.-%, based on the overall weight of the blend (A) and determined by quantitative $^{13}C\{^1H\}$ NMR measurement;

b) providing a second mixed-plastics polyethylene recycling blend (B) in an amount of 1.00 to 49.00 wt.-%, preferably 4.95 to 42.50 wt.-%, more preferably 9.95 to 38.00 wt.-%, based on the overall weight of the composition,
wherein from 80 to 97 wt.-%, preferably from 85 to 95 wt.-% wt.-%, more preferably from 87 to 93 wt.-% of the second mixed-plastics polyethylene recycling blend (B) originates from post-consumer waste and/or post-industrial waste; and wherein the second mixed-plastics polyethylene recycling blend (B) has

- a melt flow rate $MFR_2$ of from 0.30 to 4.0 g/10 min, preferably from 0.50 to 3.5 g/10 min, more preferably from 1.00 to 3.0 g/10 min, determined according to ISO 1133 at 190°C and 2.16 kg;
- a flow rate ratio $FRR_{21/2}$, being the ratio of $MFR_{21}/MFR_2$, of from 15 to 40, preferably from 17 to 37, more preferably from 20 to 35;
- a density of from 910.0 to 925.0 kg/m$^3$, preferably from 912.0 to 922.0 kg/m$^3$, most preferably from 915.0 to 920 .0kg/m$^3$, determined according to ISO 1183; and
- a total amount of ethylene units (C2 units) of from 80.00 to 95.00 wt.-%, preferably from 85.00 to 94.50 wt.-%, most preferably from 87.50 to 94.00 wt.-%, based on the overall weight of the blend (B) and determined by quantitative $^{13}C\{^1H\}$ NMR measurement;

c) optionally providing a radical initiator, optionally in form of a masterbatch in the presence of a carrier polymer, in an amount of from 0 to 5.0 wt.-%, preferably from 0.0001 to 3.5 wt.-%, more preferably from 0.001 to 2.5 wt.-%, based on the overall weight of the composition;
d) melting and mixing the mixed-plastics polyethylene recycling blend (A), the mixed-plastics polyethylene recycling blend (B) and optionally the radical initiator in an extruder, optionally a twin screw extruder, and
e) optionally pelletizing the obtained mixed-plastics polyethylene composition.

10. An article comprising the mixed-plastics polyethylene composition according to any one of the preceding claims, preferably in an amount of from 90 to 100 wt.-%, more preferably from 95 to 100 wt.-%, based on the total weight of the article.

11. The article according to claim 10 being a film, preferably a cast film or a blown film.

12. The article according to claim 11 having a film thickness of from 5 to 150 μm, preferably from 10 to 125 μm, more preferably from 20 to 100 μm.

13. The article according to claims 11 or 12 having one or more or all of the following properties:

   • a gel index of from 100 to 20,000, preferably from 250 to 10,000, more preferably from 400 to 2,500;
   • gel content having a size of from 100 to 299 μm of from 35,000 to 500,000 / $m^2$, preferably from 45,000 to 350,000 / $m^2$, more preferably from 50,000 to 200,000 /$m^2$;
   • gel content having a size of from 300 to 599 μm of from 500 to 25,000 / $m^2$, preferably from 750 to 10,000 / $m^2$, more preferably from 1,000 to 5,000 /$m^2$;
   • gel content having a size of from 600 to 999 μm of from 1 to 50 / $m^2$, preferably from 2 to 40 / $m^2$, more preferably from 3 to 30 /$m^2$;
   • gel content having a size of 1000 μm or more of from 0 to 10 / $m^2$, preferably from 0 to 5 / $m^2$, more preferably from 0 to 2 /$m^2$,

   all determined by using a gel counting apparatus as described in the experimental part on cast films with a thickness of 70 μm and a width of approximately 110 mm.

14. The article according to any one of claims 11 to 13 having one or more or all of the following properties:

   • a tensile modulus in machine direction of from 100 to 400 MPa, preferably from 125 to 350 MPa, more preferably from 150 to 300 MPa, determined according to ISO 527-3;
   • a tensile modulus in transverse direction of from 100 to 400 MPa, preferably from 125 to 350 MPa, more preferably from 150 to 300 MPa, determined according to ISO 527-3;
   • haze of from 10% to 50%, preferably from 15% to 45%, more preferably from 20% to 40%, determined according to ASTM D1003;
   • dart drop impact of from 100 to 250 g, preferably from 115 to 200 g, more preferably from 125 to 175 g, determined according to ISO 7765-1:1988 / Method A,

   wherein all properties are measured on blown films having a thickness of 40 μm.

15. Use of a mixed-plastics polyethylene composition according to any one of claims 1 to 8 for the production of a film, preferably for the production of a packaging film, with an amount of from 90.0 to 99.7 wt.-%, preferably from 92.5 to 99.0 wt.-%, more preferably from 95.0 to 98.5 wt.-%, based on the overall weight of the film, of components originating from post-consumer waste and/or post-industrial waste.

Europäisches
Patentamt

European
Patent Office

Office européen
des brevets

**EUROPEAN SEARCH REPORT**

Application Number

EP 24 19 0815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 080 168 B1 (BOREALIS AG [AT]) 25 October 2017 (2017-10-25) * the whole document * | 1-15 | INV. C08L23/04 |
| A | Van Gisbergen J: "Predicting the structure and processability of rigid post-consumer plastic waste", , 1 January 2019 (2019-01-01), XP093212639, Retrieved from the Internet: URL:https://research.tue.nl/en/studentThes es/predicting-the-structure-and-processabi lity-of-rigid-post-consume * the whole document * | 1-15 | |
| A | Rides Martin ET AL: "Measurement Good Practice Guide No. 61 Multi-rate and Extensional Flow Measurements using the Melt Flow Rate Instrument", , 1 November 2002 (2002-11-01), XP093212665, Retrieved from the Internet: URL:https://eprintspublications.npl.co.uk/ 2681/1/mgpg61.pdf * the whole document * | 1-15 | TECHNICAL FIELDS SEARCHED (IPC) C08L |
| A | EP 3 009 457 B1 (ABU DHABI POLYMERS CO LTD BOROUGE LLC [AE]; BOREALIS AG [AT]) 21 June 2017 (2017-06-21) * the whole document * | 1-15 | |
| A | EP 2 072 586 B1 (BOREALIS TECH OY [FI]) 11 November 2020 (2020-11-11) * the whole document * | 1-15 | |
| A | EP 1 739 110 B1 (BOREALIS TECH OY [FI]) 1 April 2009 (2009-04-01) * the whole document * | 1-15 | |

-/--

The present search report has been drawn up for all claims

| Place of search | Date of completion of the search | Examiner |
|---|---|---|
| Munich | 8 January 2025 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 063 222 B1 (ABU DHABI POLYMERS CO LTD BOROUGE LLC [AE]; BOREALIS AG [AT]) 8 June 2022 (2022-06-08) * the whole document * ----- | 1-15 | |
| A | EP 3 109 275 B1 (ABU DHABI POLYMERS COMPANY LTD (BOROUGE) L L C [AE]; BOREALIS AG [AT]) 9 August 2017 (2017-08-09) ----- | 1-15 | |
| A | EP 3 802 636 B1 (BOREALIS AG [AT]) 5 July 2023 (2023-07-05) ----- | 1-15 | |

TECHNICAL FIELDS
SEARCHED    (IPC)

The present search report has been drawn up for all claims

| Place of search | Date of completion of the search | Examiner |
|---|---|---|
| Munich | 8 January 2025 | Rouault, Yannick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 19 0815

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | | Publication date | Patent family member(s) | | Publication date |
|---|---|---|---|---|---|
| EP 3080168 | B1 | 25-10-2017 | BR | 112016013226 A2 | 08-08-2017 |
| | | | CN | 105793291 A | 20-07-2016 |
| | | | EP | 2883885 A1 | 17-06-2015 |
| | | | EP | 3080168 A1 | 19-10-2016 |
| | | | ES | 2652252 T3 | 01-02-2018 |
| | | | US | 2016272799 A1 | 22-09-2016 |
| | | | WO | 2015086813 A1 | 18-06-2015 |
| EP 3009457 | B1 | 21-06-2017 | CL | 2017000878 A1 | 09-02-2018 |
| | | | CN | 107108989 A | 29-08-2017 |
| | | | DK | 3009457 T3 | 31-07-2017 |
| | | | EP | 3009457 A1 | 20-04-2016 |
| | | | EP | 3207066 A1 | 23-08-2017 |
| | | | KR | 20170067822 A | 16-06-2017 |
| | | | PE | 20171539 A1 | 27-10-2017 |
| | | | WO | 2016058967 A1 | 21-04-2016 |
| EP 2072586 | B1 | 11-11-2020 | AR | 069848 A1 | 24-02-2010 |
| | | | BR | PI0821378 A2 | 16-06-2015 |
| | | | CA | 2706310 A1 | 02-07-2009 |
| | | | EP | 2072586 A1 | 24-06-2009 |
| | | | PL | 2072586 T3 | 31-05-2021 |
| | | | RU | 2010130074 A | 27-01-2012 |
| | | | WO | 2009080196 A1 | 02-07-2009 |
| EP 1739110 | B1 | 01-04-2009 | AT | E427329 T1 | 15-04-2009 |
| | | | AT | E519796 T1 | 15-08-2011 |
| | | | BR | PI0613159 A2 | 21-12-2010 |
| | | | CN | 101213227 A | 02-07-2008 |
| | | | EA | 200702607 A1 | 30-10-2008 |
| | | | EP | 1739110 A1 | 03-01-2007 |
| | | | EP | 1904545 A1 | 02-04-2008 |
| | | | KR | 20080031920 A | 11-04-2008 |
| | | | PL | 1739110 T3 | 31-08-2009 |
| | | | US | 2010047440 A1 | 25-02-2010 |
| | | | WO | 2007003322 A1 | 11-01-2007 |
| | | | ZA | 200710135 B | 29-10-2008 |
| EP 3063222 | B1 | 08-06-2022 | AU | 2013404594 A1 | 21-04-2016 |
| | | | CN | 105683279 A | 15-06-2016 |
| | | | EA | 201690674 A1 | 31-08-2016 |
| | | | EP | 3063222 A1 | 07-09-2016 |
| | | | JP | 6329271 B2 | 23-05-2018 |
| | | | JP | 2017500430 A | 05-01-2017 |
| | | | KR | 20160071395 A | 21-06-2016 |
| | | | SA | 516371031 B1 | 04-07-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 19 0815

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | | Publication date | Patent family member(s) | | Publication date |
|---|---|---|---|---|---|
| | | | US 2016229993 A1 | | 11-08-2016 |
| | | | WO 2015061922 A1 | | 07-05-2015 |
| EP 3109275 | B1 | 09-08-2017 | AU 2016284462 A1 | | 11-05-2017 |
| | | | CN 107108994 A | | 29-08-2017 |
| | | | EP 3109275 A1 | | 28-12-2016 |
| | | | KR 20170093124 A | | 14-08-2017 |
| | | | NZ 731091 A | | 31-05-2019 |
| | | | US 2018282504 A1 | | 04-10-2018 |
| | | | WO 2016206768 A1 | | 29-12-2016 |
| EP 3802636 | B1 | 05-07-2023 | BR 112020024029 A2 | | 23-02-2021 |
| | | | CN 112384539 A | | 19-02-2021 |
| | | | EA 202092604 A1 | | 28-04-2021 |
| | | | EP 3802636 A1 | | 14-04-2021 |
| | | | ES 2950671 T3 | | 11-10-2023 |
| | | | KR 20210016573 A | | 16-02-2021 |
| | | | US 2021147660 A1 | | 20-05-2021 |
| | | | WO 2019229209 A1 | | 05-12-2019 |

EPO FORM P0459

For more details about this annex : see Official Journal of the European Patent Office, No. 12/82

page 2 of 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7393916 B
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A

**Non-patent literature cited in the description**

- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B**. *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **SINGH, G** ; **KOTHARI, A.** ; **GUPTA, V.** *Polymer Testing*, 2009, vol. 28 (5), 475
- **J. RANDALL**. *Macromol. Sci., Rev. Macromol. Chem. Phys.*, 1989, vol. C29 (201)
- **A. J. BRANDOLINI** ; **D. D. HILLS**. NMR Spectra of Polymers and Polymer Additives. Marcel Dekker Inc., 2000